# EUROPÄISCHE PATENTANMELDUNG

(11) **EP 1 031 473 A2**
(43) Veröffentlichungstag der Anmeldung: **30.08.2000**
(21) Anmeldenummer: 00100328.4
(22) Anmeldetag: 07.01.2000
(51) Int. Cl.: B60R 21/20

(54) **Verfahren und Vorrichtung zum Verpacken eines Luftsackes für einen Airbagmodul**

(30) Priorität: 27.02.1999 DE 19908610
(71) Anmelder: Bayerische Motoren Werke Aktiengesellschaft, 80809 München (DE)
(72) Erfinder: Janssen, Robert, 83209 Prien (DE); Kauffeld, Lars, 81667 München (DE)

(57) **Zusammenfassung**

Die Erfindung betrifft ein Verfahren zum Verpacken eines gewebten oder gewirkten Luftsackes mit einem überwiegenden Anteil von Fasern aus einem wärmefixierbaren Kunststoff. Der Luftsack wird gefaltet und durch Aufbringen einer äußeren Kraft zusammengedrückt und im zusammengedrückten Zustand erhitzt und wärmefixiert.

## Beschreibung

Die Erfindung betrifft ein Verfahren zum Verpacken eines Luftsackes für einen Airbagmodul, bei dem ein gewebter oder gewirkter Luftsack mit einem überwiegenden Anteil von Kunststoffasern gefaltet und in einem Airbaggehäuse verstaut wird.

Ein solcher Luftsack hat nach dem Verstauen in dem Airbaggehäuse das Bestreben sich zu entspannen, d.h. die Faltung öffnet sich leicht, wodurch sein Volumen zunimmt. Dadurch entstehen aber Packungsprobleme sowohl beim Zusammenbau des Airbagmoduls als auch beim Einbau desselben in ein Kraftfahrzeug. Die in dem Kraftfahrzeug vorgesehenen Modulräume zur Aufnahme des Airbagmoduls müssen deshalb ein gewisses Übermaß haben.

Der Erfindung liegt die Aufgabe zugrunde, das gattungsgemäße Verfahren dahingehend weiterzubilden, daß sich der Luftsack in eine Raumform mit einem minimalen Volumen bringen läßt und diese Raumform beibehält.

Erfindungsgemäß wird diese Aufgabe dadurch gelöst, daß als Material für die Kunststoffasern ein wärmefixierbarer Kunststoff gewählt wird und daß der gefaltete Luftsack durch Aufbringen einer äußeren Kraft zusammengedrückt und im zusammengedrückten Zustand erhitzt und wärmefixiert wird.

Durch die Erhitzung des Luftsackes wird eine Wärmefixierung der Kunststoffasern erreicht, so daß der Luftsack seinen zusammengedrückten Zustand beibehält. Das Verstauen des Luftsackes in dem Airbaggehäuse und der Einbau des Airbagmoduls in ein Kraftfahrzeug bereitet daher keine Schwierigkeiten, weil sehr kleine Toleranzen eingehalten werden können.

Das erfindungsgemäße Verfahren kann in der Weise durchgeführt werden, daß der gefaltete Luftsack in einer Kammer mit einer beweglichen Wand angeordnet wird und daß die Kammer evakuiert wird. Unter dem auf die bewegliche Wand einwirkenden atmosphärischen Luftdruck wird der gefaltete Luftsack zusammengedrückt, und er kann anschließend, beispielsweise durch Strahlungswärme, erhitzt werden.

Eine Vorrichtung zur Durchführung des erfindungsgemäßen Verfahrens umfaßt eine den gefalteten Luftsack abstützende Platte, eine den Luftsack abdeckende gasdichte Folie, Mittel zum dichten Verbinden des Randes der Folie mit der Platte, eine Unterdruckquelle, die mit dem von der Platte und der Folie begrenzten Raum in Verbindung steht, und eine Heizeinrichtung.

Bei einer besonders vorteilhaften Ausführungsform dieser Vorrichtung ist vorgesehen, daß die Platte luftdurchlässig ist und auf einer Saugglocke abgestützt ist und daß die Mittel zum dichten Verbinden des Randes der Folie mit der Platte aus einem Spannring bestehen.

Um gleichzeitig mehrere gefaltete Luftsäcke dauerhaft in eine möglichst kleine Raumform zu bringen, ist vorgesehen, daß die Grundfläche der Platte und der Folie um ein vielfaches größer ist als diejenige des gefalteten Luftsackes.

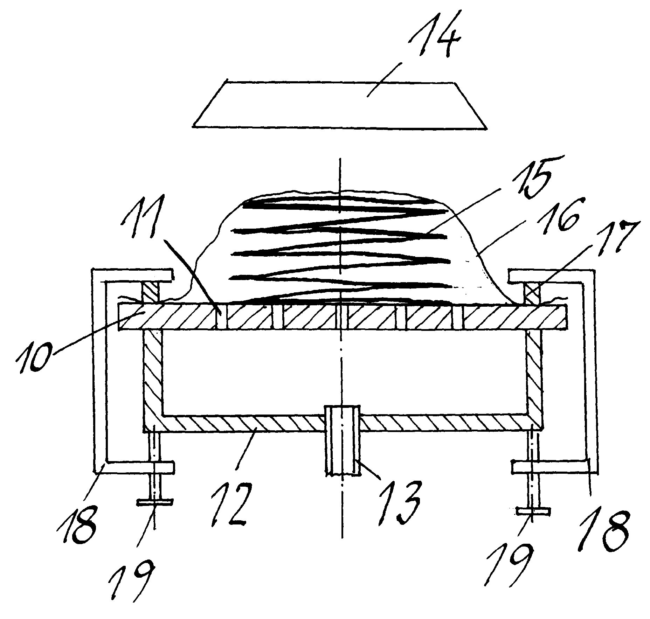

Ein bevorzugtes Ausführungsbeispiel der erfindungsgemäßen Vorrichtung ist in der Zeichnung im Schnitt dargestellt und wird nachfolgend näher erläutert.

Die Vorrichtung zum Verpacken eines Luftsackes besteht im wesentlichen aus einer Platte 10, einer Saugglocke 12 und aus einem Heizstrahler 14. Die Platte 10 ist mit Bohrungen 11 versehen oder auf andere Weise luftdurchlässig ausgebildet. Die Saugglocke 12 ist über einen in ihren Boden eingesetzten Rohrstutzen 13 mit einer (nicht gezeigten) Unterdruckquelle verbindbar.

Nachfolgend wird die Arbeitsweise der gezeigten Vorrichtung erläutert. Zunächst wird ein gefalteter Luftsack 15 auf die Platte 10 aufgelegt. Der Luftsack 15 wird sodann mit einer gasdichten Folie 16 aus einem geschmeidigen Material bedeckt. Auf den Randbereich der Folie 16 wird ein Spannring 17 aufgelegt. Der Spannring 17 kann mit mehreren Spannpratzen 18, deren Gewindespindeln 19 sich am Boden der Saugglocke 12 abstützen, mit der Platte 10 verspannt werden. Um eine Beschädigung der Folie 16 zu vermeiden, sollte der Spannring 17 eine gepolsterte Berührungsfläche aufweisen. Es ist aber auch möglich, zwischen dem Spannring 17 und der Folie 16 einen zusätzlichen Ring aus einem nachgiebigen Material anzuordnen. Wesentlich ist, daß die Folie 17 im Umfangsbereich mit der Platte 10 dicht verbunden ist.

Sodann wird die Saugglocke 12 durch Öffnen eines (nicht gezeigten) Ventils mit der Unterdruckquelle verbunden, um sie zu evakuieren. Der in der Saugglocke 12 erzeugte Unterdruck pflanzt sich über die Bohrungen 11 in der Platte 10 in den von der Platte 10 und der Folie 16 begrenzten Raum fort. Der gefaltete Luftsack 15 wird daher unter dem auf die Außenfolie 16 einwirkenden atmosphärischen Luftdruck zusammengedrückt.

Gleichzeit mit oder nach dem Anlegen des Unterdruckes wird der Heizstrahler 14 eingeschaltet, um den Luftsack 15 zu erwärmen. Der Luftsack 15 besteht aus einem gewebten oder gewirkten Material, das zum überwiegenden Teil Kunststoffasern enthält. Die Erwärmung des Luftsackes bewirkt eine Wärmefixierung der Kunststoffasern. Nach erfolgter Wärmefixierung wird der Heizstrahler 14 abgeschaltet, und die Verbindung der Saugglocke 12 mit der Unterdruckquelle wird unterbrochen. Daraufhin werden die Spannpratzen 18 gelöst, so daß der Spannring 17 abgenommen und die Folie 16 beseitigt werden kann. Wegen der Wärmefixierung der Kunststoffasern behält der Luftsack 15 seinen zusammengedrückten Zustand und damit sein geringstmögliches Volumen bei. Der Luftsack 15 kann deshalb ohne Schwierigkeiten in einem Airbaggehäuse eines Airbagmoduls verstaut werden. Da der Luftsack 15 auch später seine Form nicht ändert, bereitet auch der Einbau des Airbagmoduls in ein Kraftfahrzeug keine Schwierigkeiten, und es sind kleine Toleranzen möglich.

Für den Fachmann ist erkennbar, daß die Vorrichtung auch so dimensioniert werden kann, daß gleichzeitig mehrere Luftsäcke zusammengedrückt und wärmefixiert werden können. Im übrigen könnte anstelle des Heizstrahlers selbstverständlich auch jede andere geeignete Einrichtung zum Erwärmen der Luftsäcke verwendet werden, wie z.B. ein Heißluftgebläse oder eine Kontaktheizung.

### Bezugszeichenliste:

- 10: Platte
- 11: Bohrungen
- 12: Saugglocke
- 13: Rohrstutzen
- 14: Heizstrahler
- 15: Luftsack
- 16: Folie
- 17: Spannring
- 18: Spannpratzen
- 19: Gewindespindel

## Patentansprüche

1. Verfahren zum Verpacken eines Luftsackes für einen Airbagmodul, bei dem ein gewebter oder gewirkter Luftsack mit einem überwiegenden Anteil von Kunststoffasern gefaltet und in einem Airbaggehäuse verstaut wird, dadurch **gekennzeichnet**, daß als Material für die Kunststoffasern ein wärmefixierbarer Kunststoff gewählt wird und daß der gefaltete Luftsack durch Aufbringen einer äußeren Kraft zusammengedrückt und im zusammengedrückten Zustand erhitzt und wärmefixiert wird.

2. Verfahren nach Anspruch 1, dadurch gekennzeichnet, daß der gefaltete Luftsack in einer Kammer mit einer beweglichen Wand angeordnet wird und daß die Kammer evakuiert wird.

3. Verfahren nach Anspruch 1 oder 2, dadurch **gekennzeichnet**, daß der Luftsack durch Strahlungswärme erhitzt wird.

4. Vorrichtung zur Durchführung des Verfahrens nach einem der vorhergehenden Ansprüche, **gekennzeichnet** durch eine den gefalteten Luftsack (15) abstützende Platte (10), eine den Luftsack abdeckende gasdichte Folie (16), Mittel (17) zum dichten Verbinden des Randes der Folie (16) mit der Platte (10), eine Unterdruckquelle (12), die mit dem von der Platte (10) und der Folie (16) begrenzten Raum in Verbindung steht, und eine Heizeinrichtung (14).

5. Vorrichtung nach Anspruch 4, dadurch **gekennzeichnet**, daß die Platte (10) luftdurchlässig ist und auf einer Saugglocke (12) abgestützt ist und daß die Mittel zum dichten Verbinden des Randes der Folie (16) mit der Platte (10) aus einem Spannring (17) bestehen.

6. Vorrichtung nach Anspruch 4 oder 5, dadurch **gekennzeichnet**, daß die Grundfläche der Platte (10) und der Folie (16) um eine vielfaches größer ist als diejenige des gefalteten Luftsackes (15).
